# EUROPÄISCHE PATENTSCHRIFT

(11) **EP 0 780 269 B1**
(45) Veröffentlichungstag und Bekanntmachung des Hinweises auf die Patenterteilung: **22.09.1999**
(21) Anmeldenummer: 96120217.3
(22) Anmeldetag: 17.12.1996
(51) Int. Cl.: B60R 21/26

(54) **Vorrichtung zum schnellen Aufblasen eines Luftkissens**
Fast airbag inflator device
Appareil pour le gonflage rapide d'un dispositif de sécurité

(30) Priorität: 23.12.1995 DE 19548571
(43) Veröffentlichungstag der Anmeldung: 25.06.1997
(73) Patentinhaber: MST Automotive GmbH Automobil-Sicherheitstechnik, 63743 Aschaffenburg (DE)
(72) Erfinder: Fritz, Raimund, 78647 Trossingen (DE); Metzger, Marcus, 76534 Baden-Baden (DE); Bach, Elke, 78727 Oberndorf/Neckar (DE); Huber, Roland, 78713 Schramberg (DE); Sütterlin, Klaus, 79331 Teningen/Köndringen (DE)
(74) Vertreter: Degwert, Hartmut, Dipl.-Phys.

(56) Entgegenhaltungen:
- EP-A- 0 639 483
- WO-A-91/11347
- US-A- 5 242 194

## Beschreibung

Die Erfindung betrifft eine Vorrichtung zum schnellen Aufblasen eines Luftkissens mit einem Druckgasbehälter und einem Treibsatzbehälter, dessen pyrotechnischer Inhalt bei Zündung ein Treibgas bildet, sowie mit einer bei Zündung des Treibsatzes absprengbaren Berstscheibe, die nach dem Absprengen den gesamten Einströmquerschnitt zwischen Druckgasbehälter und Treibsatzbehälter zum Luftkissen freigibt.

Derartige Vorrichtungen sind aus der EP 04 64 189 B1 und der EP 05 54 919 B1 bekannt. Dabei weist die Berstscheibe eine oder mehrere Sollbruchstellen auf, deren Festigkeit so bemessen ist, daß sich zuerst ein bestimmter Mindestdruck aufbauen muß, bevor die Berstscheibe den Einströmquerschnitt zum Luftkissen freigibt und letzteres aufgeblasen werden kann. Für Luftkissen, die zum Schutz von Fahrgästen im Lenkrad oder in der Armaturentafel angeordnet sind, haben sich diese Vorrichtungen bewährt, da es wegen des verhältnismäßig großen Abstandes zwischen Einbauort und Fahrgast voll aufgeblasen werden kann, bevor der Fahrgast darin aufgefangen wird. Mit anderen Worten, die Zeit zwischen der Generierung eines Auslösesignals und dem Kontakt zwischen Fahrgast und Luftkissen ist groß genug, den Treibsatz zu zünden, das Treibgas zu erzeugen und in das Luftkissen einströmen zu lassen. Für diesen Vorgang wird im allgemeinen mit Zeitspannen von 30 bis 40 ms gerechnet. Derartige Zeitspannen sind jedoch zu lang, wenn ein Luftkissen deutlich schneller gefüllt werden muß, wie beispielsweise bei einem Seitenairbag. Für diese Fälle stehen für den gesamten Vorgang nur 8 bis 12 ms zur Verfügung.

Es besteht somit die Aufgabe, die bekannten, gattungsmäßigen Vorrichtungen mit Berstscheibe so weiterzuentwickeln, daß mit ihnen auch sehr kurze Aufblaszeiten erreichbar sind.

Zur Lösung dieser Aufgabe wird erfindungsgemäß vorgeschlagen, daß die Berstscheibe eine Öffnung aufweist, durch die Treibgas schon unmittelbar nach der Zündung und noch vor dem Absprengen der Berstscheibe in das Luftkissen einströmen kann.

Dabei wird die Öffnung in der Berstscheibe selbstverständlich so angeordnet, daß der Druckgasbehälter bis zum Absprengen der Berstscheibe dicht verschlossen bleibt und nur zwischen dem Treibsatzbehälter und dem Einströmquerschnitt des Luftkissens eine Verbindung hergestellt wird. Dadurch können die sich nach der Zündung entwickelnden Treibgase schon vor dem Absprengen der Berstscheibe in das Luftkissen gelangen und den Beginn des Aufblasens bewirken. Es ist ohne weiteres einleuchtend, daß über die Querschnittsbemessung der erfindungsgemäße Öffnung in der Berstscheibe dieser Anfangs-Aufblaseffekt zu beeinflussen ist und daß man damit auch die Gesamtaufblaszeit bestimmen kann. Neben dem Vorteil einer verkürzten Aufblaszeit ergibt sich also auch eine sehr einfache Möglichkeit, die Vorrichtung hinsichtlich der Aufblaszeit an verschiedene Anforderungen anpassen zu können.

Darüber hinaus wird durch die Öffnung in der Berstscheibe erreicht, daß der Anfangsdruck des Treibgases nicht in voller Höhe dem nach dem Absprengen der Berstscheibe ausströmenden Druckgas entgegengerichtet ist, was bei herkömmlichen Vorrichtungen u.U. mit einem erheblichen Verzögerungseffekt für das Aufblasen des Luftkissens verbunden ist.

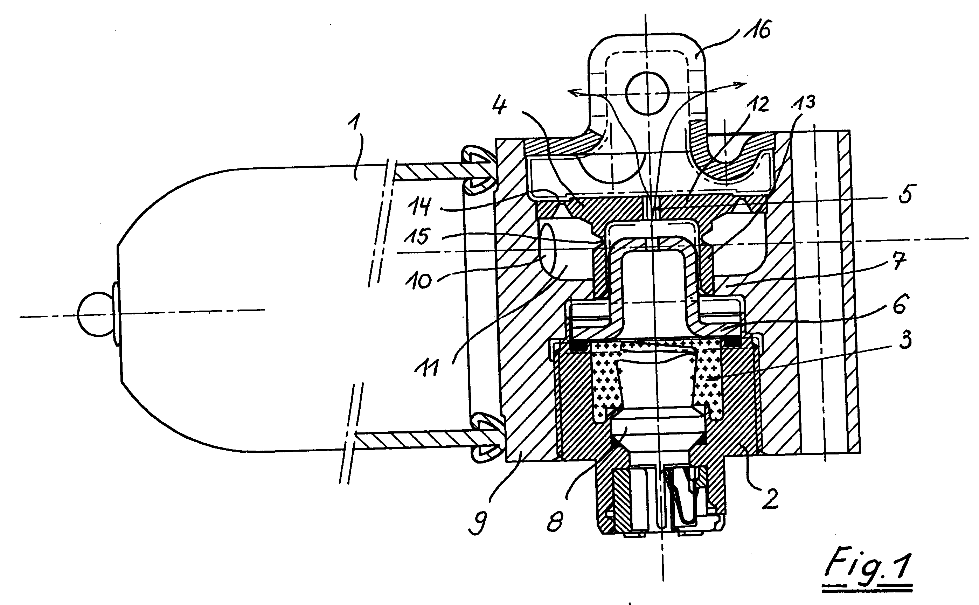

Zweckmäßige Ausgestaltungen des Erfindungsgedankens sind in den Ansprüchen 2 - 8 beschrieben. Weitere Einzelheiten und Vorteile werden anhand des in Fig. 1 dargestellten Ausführungsbeispiels naher erläutert.

Fig. 1 zeigt einen Teilschnitt durch eine Vorrichtung gemäß der Erfindung, die sich von den aus dem Stand der Technik bekannten, einschlägigen Vorrichtungen im wesentlichen dadurch unterscheidet, daß die Berstscheibe (4) eine zentrale Öffnung (5) aufweist. Die Vorrichtung umfaßt einen Druckgasbehälter (1) und einen Treibsatzbehälter (2), dessen pyrotechnischer Inhalt (3) bei Zündung ein Treibgas bildet, das bei entsprechendem Druckaufbau in der Lage ist, die Berstscheibe (4) längs der umlaufenden Sollbruchstellen (14, 15) abzusprengen und damit den/die Durchlässe (10) zwischen Druckgasbehälter (1) und (nicht dargestelltem) Luftkissen freizugeben.

Druckgasbehälter (1), Treibsatzbehälter (2) und Zündeinrichtung (8) sind üblicherweise in bzw. an einem gemeinsamen Gehäuse angeordnet, das einen Anschlag (7) aufweist, um die Bewegung einer längs der Mittelachse verschieblichen Drosselscheibe (6) zu begrenzen, wenn diese unter dem Einfluß des Treibgases beschleunigt wird und das Absprengen der Berstscheibe (5) durch einen mechanischen Schlag auslöst bzw. unterstützt.

Die Berstscheibe (4) hat einen zylindrischen Teil (13), in dem die hutförmige Drosselscheibe (6) geführt ist, und einen scheibenförmigen Teil (12), der den oberen Abschluß eines Gasraumes (11) bildet und die erfindungsgemäße Öffnung (5) aufweist. Die Berstscheibe (4) hat im zylindrischen Teil (13) eine umlaufende Sollbruchstelle (15) und im scheibenförmigen Teil (12) eine ringförmige Sollbruchstelle (14). Die Durchlässe (10) bilden eine offene Verbindung zwischen dem Druckgasbehälter (1) und dem Gasraum (11) im Gehäuse (9), wobei die Berstscheibe (4) als Verschluß für den Druckgasbehälter (1) dient. Auf der anderen Seite ist der Raum oberhalb des Treibsatzbehälters (2) über die Öffnung (5) von Anfang an mit dem Luftkissen verbunden. Diese erfindungsgemäße Abwandlung der bekannten Vorrichtungen ist möglich, weil der pyrotechnische Inhalt (3) keinen druckdichten Abschluß erfordert.

Oberhalb der Berstscheibe (4) ist noch ein hutförmiger Diffusor (16) im Gehäuse (9) befestigt, der in bekannter Weise einerseits zur gleichmäßigen Verteilung der das Luftkissen aufblasenden Gase und andererseits dem Auffangen der abgesprengten Berstscheibe (4) dient.

## Patentansprüche

1. Vorrichtung zum schnellen Aufblasen eines Luftkissens mit einem Druckgasbehälter (1) und einem Treibsatzbehälter (2), dessen pyrotechnischer Inhalt (3) bei Zündung ein Treibgas bildet, sowie mit einer bei Zündung des Treibsatzes absprengbaren Berstscheibe (4), die nach dem Absprengen den gesamten Einströmquerschnitt zwischen Druckgasbehälter (1) und Treibsatzbehälter (2) zum Luftkissen freigibt, dadurch gekennzeichnet, daß die Berstscheibe (4) eine Öffnung (5) aufweist, durch die Treibgas schon unmittelbar nach der Zündung und noch vor dem Absprengen der Berstscheibe (4) in das Luftkissen einströmen kann.

2. Vorrichtung nach Anspruch 1, dadurch gekennzeichnet, daß zwischen Treibsatzbehälter (2) und Berstscheibe (4) ein in Richtung auf die Berstscheibe (4) bewegliche Drosselscheibe (6) vorgesehen ist, mittels derer das Absprengen der Berstscheibe (4) mechanisch ausgelöst wird.

3. Vorrichtung nach Anspruch 2, dadurch gekennzeichnet, daß die Drosselscheibe (6) im Querschnitt hutförmig ausgebildet ist und daß ihre Bewegung in Richtung Berstscheibe (4) durch einen randseitig an der Drosselscheibe (6) wirkenden Anschlage (7) begrenzt ist.

4. Vorrichtung nach einem der Ansprüche 1 bis 3, dadurch gekennzeichnet, daß der Treibsatzbehälter (2) zusammen mit einer Zündeinrichtung (8), der Berstscheibe (4) und der Drosselscheibe (6) in einem gemeinsamen Gehäuse (9) angeordnet ist, daß der Anschlag (7) einen Teil des Gehäuses (9) bildet und daß der Druckgasbehälter (1) am Gehäuse (9) befestigt ist und über mindestens einen Durchlaß (10) mit einem Gasraum (11) im Gehäuse (9) verbunden ist, der durch die Berstscheibe (4) druckdicht verschlossen ist.

5. Vorrichtung nach einem der Ansprüche 1 bis 4, dadurch gekennzeichnet, daß die Berstscheibe (4) einstückig aus einem flachen Deckelbereich (12) und einem rohrförmigen Ansatz (13) besteht und daß sie sowohl randseitig über den Deckelbereich (12) wie auch stirnseitig über den Ansatz (13) mit dem Gehäuse (9) verbunden ist.

6. Vorrichtung nach Anspruch 5, dadurch gekennzeichnet, daß die Berstscheibe (4) sowohl im Deckelbereich (12) wie auch im rohrförmigen Ansatz (13) eine ringförmige Sollbruchstelle (14, 15) aufweist.

7. Vorrichtung nach einem der Ansprüche 4 bis 6, dadurch gekennzeichnet, daß das Gehäuse (9) mit einem Gasauslaßteil (16) versehen ist, das gleichzeitig als Anschlag für die abgesprengte Berstscheibe (4) dient.

8. Vorrichtung nach einem der Ansprüche 1 bis 7, dadurch gekennzeichnet, daß die Öffnung (5) in der Berstscheibe (4) zentral angeordnet ist und daß ihre Größe zur Steuerung des Voreinströmens von Treibgas in das Luftkissen herangezogen wird.

## Claims

1. An apparatus for the quick inflation of an airbag, having a compressed gas tank (1) and a propellant charge container (2) whose pyrotechnical content (3) forms a propellant gas upon ignition, as well as having a breakaway disk (4) which can be blown off upon the ignition of the propellant charge and which after being blown off releases to the airbag the entire passage cross section between the compressed gas tank (1) and the propellant charge container (2), characterized in that the breakaway disk (4) has an opening (5) through which propellant gas can flow into the airbag immediately after the ignition and still before the blowing off of the breakaway disk (4).

2. The apparatus according to claim 1, characterized in that between the propellant charge container (2) and the breakaway disk (4) a choke disk (6) is provided which can move toward the breakaway disk (4) and by means of which the blowing off of the breakaway disk (4) is brought about mechanically.

3. The apparatus according to claim 2, characterized in that the choke disk (6) is of hat-shaped cross section and that its movement toward the breakaway disk (4) is limited by an abutment (7) acting on the choke disk (6) on its brim end.

4. The apparatus according to any one of the claims 1 to 3, characterized in that the propellant charge container (2) is disposed together with an igniter (8), the breakaway disk (4) and the choke disk (6) in a common housing (9), that the abutment (7) forms part of the housing (9), and that the compressed gas tank (1) is fastened to the housing (9) and is connected by at least one port (10) to the gas chamber (11) in the housing (9) which is closed in a pressure-tight manner by the breakaway disk (4).

5. The apparatus according to any one of the claims 1 to 4, characterized in that the breakaway disk (4) consists integrally of a flat cover portion (12) and a tubular stem (13) and that it is connected with the housing (9) both at the margin by the cover portion (12) and at the end by the stem (13).

6. The apparatus according to claim 5, characterized in that the breakaway disk (4) has an annular predetermined breaking site (14, 15) both in the cover portion (12) and in the tubular stem (13).

7. The apparatus according to any one of the claims 4 to 6, characterized in that the housing (9) is provided with a gas outlet part (16) which serves simultaneously as an abutment for the blown off breakaway disk (4).

8. The apparatus according to any one of the claims 1 to 7, characterized in that the opening (5) in the breakaway disk (4) is disposed centrally and that its size is made use of for controlling the initial flow of propellant into the airbag.

## Revendications

1. Dispositif destiné au gonflage rapide d'un coussin à gaz, et comportant un réservoir de gaz comprimé (1) et un réservoir d'agent de propulsion (2) dont la substance pyrotechnique (3) forme, lors de l'allumage, un gaz propulseur, ainsi qu'une plaque de rupture (4) qui peut éclater lors de l'allumage de l'agent de propulsion et qui, après éclatement, libère la totalité de la section de passage d'écoulement entre réservoir de gaz comprimé (1) et réservoir d'agent de propulsion (2) en direction du sac gonflable, caractérisé en ce que la plaque de rupture (4) présente une ouverture (5) par laquelle du gaz propulseur peut déjà affluer dans le sac gonflable immédiatement après l'allumage et tout juste avant l'éclatement de la plaque de rupture (4).

2. Dispositif selon la revendication 1, caractérisé en ce qu'il est prévu, entre le réservoir d'agent de propulsion (2) et la plaque de rupture (4), un élément mobile en direction de la plaque de rupture (4) et formant clapet (6) à l'aide duquel l'éclatement de la plaque de rupture (4) est mécaniquement déclenché.

3. Dispositif selon la revendication 2, caractérisé en ce que l'élément formant clapet (6) est réalisé avec une section transversale en forme de chapeau et en ce que son déplacement en direction de la plaque de rupture (4) est limité par une butée (7) agissant du côté bord contre l'élément formant clapet (6).

4. Dispositif selon l'une des revendications 1 à 3, caractérisé en ce que le réservoir d'agent de propulsion (2) est disposé, en même temps qu'un dispositif d'allumage (8), que la plaque de rupture (4) et que l'élément formant clapet (6), dans un carter (9) commun, en ce que la butée (7) constitue une partie du carter (9) et en ce que le réservoir de gaz comprimé (1) est fixé au carter (9) et est relié, par l'intermédiaire d'au moins un passage (10) à une chambre de gaz (11) à l'intérieur du carter (9), cette chambre étant fermée par la plaque de rupture (4) de manière étanche à la pression.

5. Dispositif selon l'une des revendications 1 à 4, caractérisé en ce que la plaque de rupture (4) consiste en une zone formant couvercle plat (12) et en un appendice tubulaire (13), d'un seul tenant, et en ce qu'elle est reliée, aussi bien du côté bord, par l'intermédiaire de la zone formant couvercle (12), que du côté avant, par l'intermédiaire de l'appendice (13), au carter (9).

6. Dispositif selon la revendication 5, caractérisé en ce que la plaque de rupture (4) présente, aussi bien dans la zone formant couvercle (12) que dans l'appendice tubulaire (13), un point destiné à la rupture (14, 15) de forme annulaire.

7. Dispositif selon l'une des revendications 4 à 6, caractérisé en ce que le carter (9) est pourvu d'une partie de sortie de gaz (16), qui sert en même temps de butée pour la plaque de rupture (4) à l'état éclaté.

8. Dispositif selon l'une des revendications 1 à 7, caractérisé en ce que l'ouverture (5), présente dans la plaque de rupture (4), est disposée de manière centrale et en ce que sa taille est exploitée pour la commande de l'admission préalable de gaz propulseur dans le coussin à gaz.
